(19) Europäisches Patentamt / European Patent Office / Office européen des brevets

(11) **EP 3 900 104 B1**

(12) **FASCICULE DE BREVET EUROPEEN**

(45) Date de publication et mention de la délivrance du brevet:
**21.02.2024 Bulletin 2024/08**

(21) Numéro de dépôt: **19818178.6**

(22) Date de dépôt: **18.12.2019**

(51) Classification Internationale des Brevets (IPC):
***H01P 5/18*** *(2006.01)*

(52) Classification Coopérative des Brevets (CPC):
**H01P 5/182**

(86) Numéro de dépôt international:
**PCT/EP2019/085852**

(87) Numéro de publication internationale:
**WO 2020/127424 (25.06.2020 Gazette 2020/26)**

(54) **COUPLEUR HYPERFREQUENCE BIDIRECTIONNEL COMPRENANT DEUX GUIDES D'ONDE PARALLELES, A DOUBLE NERVURE**

BIDIREKTIONALER HYPERFREQUENZKOPPLER MIT ZWEI PARALLELEN DOPPELRIPPENWELLENLEITERN

BIDIRECTIONAL HYPERFREQUENCY COUPLER COMPRISING TWO PARALLEL DOUBLE-RIB WAVEGUIDES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.12.2018 FR 1873069**

(43) Date de publication de la demande:
**27.10.2021 Bulletin 2021/43**

(73) Titulaire: **THALES**
**92190 Meudon (FR)**

(72) Inventeurs:
• **PIQUET, Jean-Luc**
**78140 Velizy (FR)**
• **BARIOU, David**
**78140 Velizy (FR)**
• **BOUALAM, Nasser**
**78140 Velizy (FR)**

(74) Mandataire: **Atout PI Laplace**
**Immeuble "Visium"**
**22, avenue Aristide Briand**
**94117 Arcueil Cedex (FR)**

(56) Documents cités:
**US-A- 2 951 997**

• **William J Getsi: "Ridge Waveguide Field Description and Application to Directional Couplers*", IRE Transactions on Microwave Theory and Techniques, 1 janvier 1962 (1962-01-01), XP055629105, DOI: 10.1109/TMTT.1962.1125444 Extrait de l'Internet: URL:https://ieeexplore.ieee.org/ielx6/4547 924/24881/01125444.pdf?tp=&arnumber=112544 4&isnumber=24881&ref=aHR0cHM6Ly9pZWVle HBsb 3JlLmllZWUub3JnL2RvY3VtZW50LzExMjU0ND Q= [extrait le 2019-10-07]**

**Description**

La présente invention porte sur un coupleur hyperfréquence bidirectionnel comprenant deux guides d'onde parallèles, à double nervure.

Dans la plupart des dispositifs hyperfréquences, il est nécessaire de pouvoir prélever une partie déterminée du signal élaboré, afin de mesurer les différents paramètres définissant ce signal hyperfréquence et, éventuellement, de les corriger en fonction des conditions d'utilisation. Cette opération est réalisée à l'aide de dispositifs connus sous le nom de coupleurs, qui prélèvent un pourcentage déterminé de la puissance véhiculée.

Les sources d'émission hyperfréquence délivrant des puissances souvent élevées, le moyen de propagation le plus adapté sont les guides d'onde.

Il est connu des coupleurs directifs à très large bande, typiquement de 1 GHz à 100 GHz, réalisés sous forme de coupleurs à trous, les trous servant à réaliser le couplage entre les deux guides d'onde.

Un exemple de réalisation d'un tel coupleur à trous est illustré sur la figure 1, provenant du livre "Microwave Engineering", p. 339, de David M. Pozar, 4ed, Wiley, 2012. US2951997A divulgue un coupleur bidirectionnel comprenant deux guides d'onde à double nervure perpendiculaires.

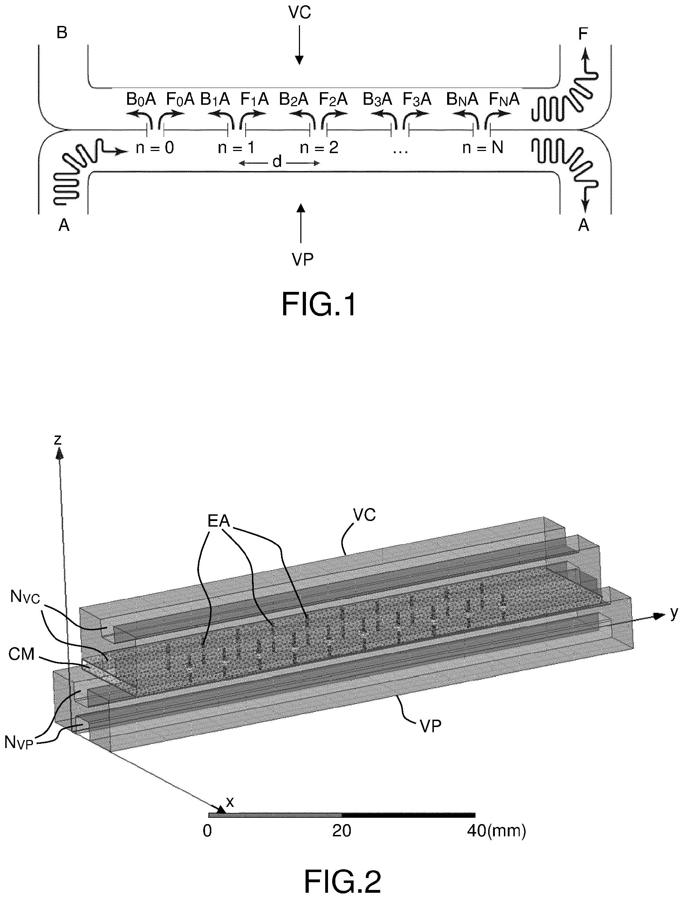

Sur la figure 1 est représenté un coupleur hyperfréquence bidirectionnel à trous comprenant deux guides d'onde parallèles superposés, formant respectivement une voie principale VP et une voie de couplage VC. Le coupleur comprend N+1 trous indicés de n=0 à n=N.

Un tel coupleur multi-trous permet d'agir sur la directivité, en fonction de la fréquence. En effet, l'ensemble des diamètres des trous sont autant de paramètres d'une fonction associée et qui permettent d'obtenir, par exemple, une réponse de type Tchebychev, ou encore une réponse de type binomiale, parmi les plus classiques.

En considérant le cas général du coupleur multi-trous de la figure 1, comprenant N+1 trous équidistants couplant les deux guides d'onde parallèles, l'amplitude de l'onde incidente dans le guide voie principale VP est A. Au niveau de chaque ouverture, une petite fraction de cette onde est transmise vers la voie couplée générant sur cette voie une onde dirigée positivement d'amplitude $A * F_n$ et une onde dirigée négativement d'amplitude $A * B_n$. $F_n$ et $B_n$ sont respectivement les coefficients de couplage de l'onde positive et de l'onde négative. Les trous sont équidistant d'une distance d, en m.

Par exemple, un coupleur de 20 dB a un facteur de couplage de puissance de $10^{-20/10} = 0,01$, de sorte que la puissance transmise par le guide d'onde vaut 1 - 0,01 = 0,99 de la puissance incidente (1% couplée au guide supérieur).

La chute de tension (ou de champ) dans le guide d'onde voie principale VP est égale à $\sqrt{0,99} =$ 0,995, soit 0,5%. Ainsi, l'amplitude du champ incident est identique à chaque trou, mais la phase change d'une ouverture à l'autre.

Aussi une ouverture ou trou excite généralement les ondes progressives opposées avec des amplitudes différentes. Aussi, en nommant $F_n$ le coefficient de couplage du $n^{ième}$ trou dans la direction avant, et en nommant $B_n$ le coefficient de couplage du $n^{ième}$ trou dans la direction arrière, l'amplitude de l'onde dans la direction avant peut s'écrire :

$$F = Ae^{-j\beta Nd} \sum_{n=0}^{N} F_n$$ , car toutes les composantes voyagent sur un chemin de même longueur.

L'amplitude de l'onde dans la direction arrière peut s'écrire :

$$B = A \sum_{n=0}^{N} B_n e^{-2j\beta nd}$$ , car la longueur du chemin de la $n^{ième}$ composante est $2\beta nd$.

$\beta$ représente la constante de propagation, en rad/m.

La référence de phase est prise au premier trou d'indice 0.

Le couplage C et la directivité D peuvent être calculés par les relations suivantes :

$$C = -20 \log \left| \frac{F}{A} \right| = -20 \log \left| \sum_{n=0}^{N} F_n \right| \quad dB$$

$$D = -20 \log \left| \frac{B}{F} \right| = -20 \log \left| \frac{\sum_{n=0}^{N} B_n e^{-2j\beta nd}}{\sum_{n=0}^{N} F_n} \right| \quad dB$$

Un but de l'invention est de diminuer la longueur importante pour une directivité donnée.

Il est proposé, selon un aspect de l'invention, un coupleur hyperfréquence bidirectionnel comprenant deux guides d'onde parallèles à double nervure, ayant deux faces respectives disposées en vis-à-vis et reliées mécaniquement par une couche métallique, et comprenant des ensembles antenne reliant les intérieurs respectifs de parties pleines hors nervures des deux guides d'onde, un ensemble antenne comprenant une antenne montée fixement dans un insert diélectrique monté fixement dans ladite couche métallique.

Ainsi, la longueur d'un tel coupleur est réduite par rapport à un coupleur à trous de l'état de l'art, car il permet, par rapport aux ouvertures circulaires d'obtenir un couplage plus fort entre la voie principale et la voie couplée.

La longueur est ainsi raccourcie d'environ 30 % à 70 % par rapport à un coupleur à trous. Par exemple, un coupleur de 100 mm a été ainsi réalisé dans la bande 6 à 18 GHz en conservant une bonne directivité, i.e. une directivité supérieure à 17 dB.

L'espacement entre les antennes selon l'invention peut être nettement inférieur à celui nécessaire à un coupleur équivalent à trous, qui, s'il était de même longueur, par exemple 100 mm, aurait une directivité nettement inférieure à 17 dB, de l'ordre de 10 dB.

Dans un mode de réalisation, un insert diélectrique comprend un épaulement externe et un épaulement interne.

L'épaulement externe permet de maintenir fixe l'insert dans la couche métallique entre les deux guides d'onde, et l'épaulement interne permet de maintenir fixe l'antenne dans l'insert, et ce, de manière simple à réaliser, et à coût réduit.

Dans un mode de réalisation, un insert diélectrique monté fixement dans ladite couche métallique est dépourvu de portion à l'intérieur des deux guides d'onde.

Ainsi, aucune partie d'insert ne se retrouve à l'intérieur des deux guides d'onde, ce qui simplifie la conception du coupleur, et facilite les échanges thermiques.

Selon un mode de réalisation, une antenne est de forme cylindrique et munie d'une collerette destinée à être montée en butée sur l'épaulement interne d'un insert.

Les formes cylindriques sont aisées à réaliser pour les butées, ainsi que pour les épaulements.

Dans un mode de réalisation, un insert diélectrique comprend un fluoropolymère, tel du polytétrafluoroéthylène (de sigle PTFE) qui est un fluoropolymère issu du tétrafluoroéthylène.

Selon un mode de réalisation, une antenne comprend de l'aluminium et/ou du cuivre.

Dans un mode de réalisation, la couche métallique comprend du cuivre et/ou de l'aluminium.

L'invention sera mieux comprise à l'étude de quelques modes de réalisation décrits à titre d'exemples nullement limitatifs et illustrés par les dessins annexés sur lesquels:

La figure 1 illustre schématiquement un coupleur hyperfréquence bidirectionnel à trous, selon l'état de l'art ;
La figure 2 illustre schématiquement un coupleur hyperfréquence bidirectionnel, en perspective, selon un aspect de l'invention ;
La figure 3 illustre schématiquement le coupleur hyperfréquence bidirectionnel de la figure 1, en vue de coupe, selon un aspect de l'invention ;
La figure 4 illustre schématiquement un ensemble antenne, selon un aspect de l'invention ; et
La figure 5 illustre schématiquement une pluralité d'ensemble antenne, en vue de coupe, selon un aspect de l'invention.

Sur l'ensemble des figures, les éléments ayant des références identiques sont similaires.

Dans la présente description, les modes de réalisation décrits ne sont pas limitatifs, et les caractéristiques et fonctions bien connues de l'homme du métier ne sont pas décrites en détails.

La figure 2 représente schématiquement un coupleur hyperfréquence bidirectionnel, en vue de coupe, selon un aspect de l'invention, comprenant deux guides d'onde parallèles VP, VC, à double nervure $N_{VP}$, $N_{VC}$, ayant deux faces respectives disposées en vis-à-vis et reliées mécaniquement par une couche métallique CM.

Les deux guides d'onde VP et VC ont deux faces respectives disposées en vis-à-vis (vi leur grand côté) et reliées mécaniquement par la couche métallique CM, et comprennent des ensembles antenne EA reliant les intérieurs respectifs de parties pleines hors nervures $N_{VC}$, $N_{VP}$, des deux guides d'onde VP, VC.

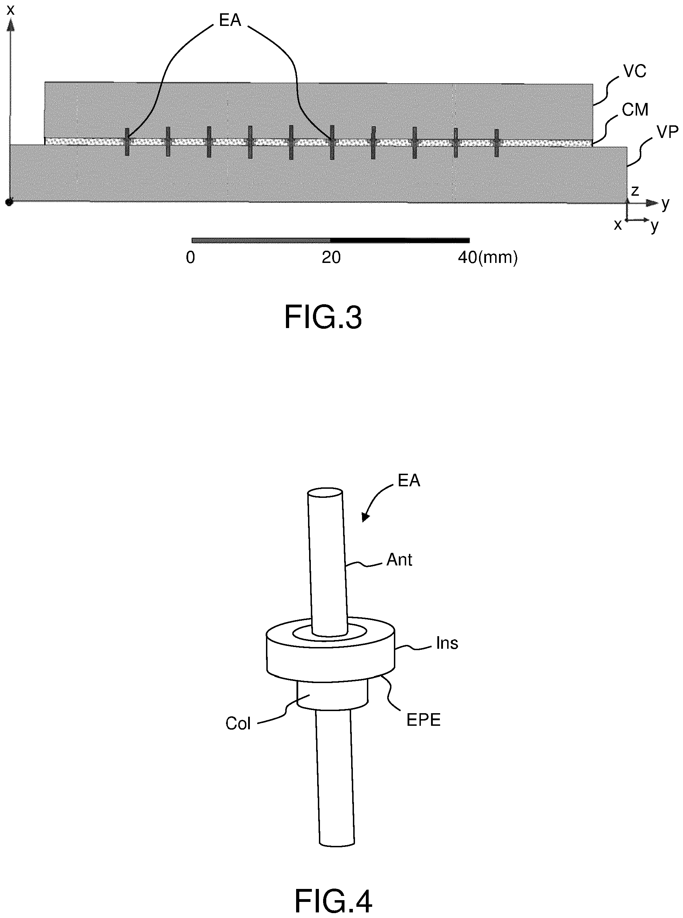

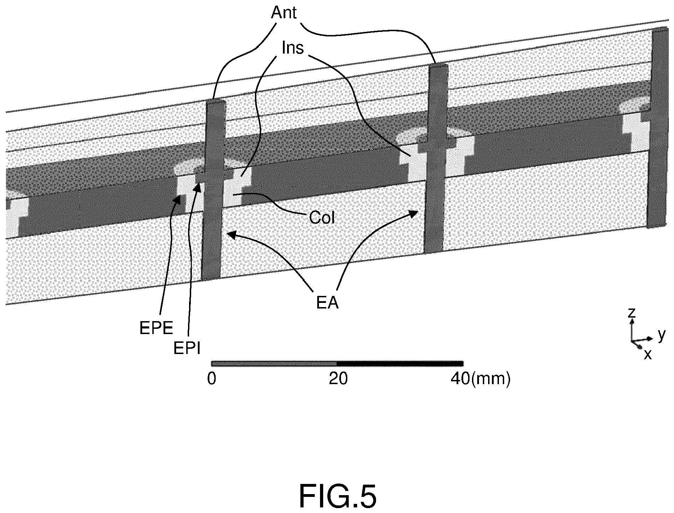

Comme représenté sur les figures 4 et 5, un ensemble antenne EA comprend une antenne Ant montée fixement dans un insert diélectrique Ins monté fixement dans la couche métallique CM.

Ainsi le couplage est fait par les antennes Ant et non par des trous comme dans l'état de l'art.

L'insert diélectrique Ins sert à la fois d'isolant électrique et de support.

L'insert Ins comprend un épaulement interne EPI et un épaulement externe EPE. L'épaulement externe EPE permet de maintenir fixe l'insert Ins dans la couche métallique CM entre les deux guides d'onde VP, VC, et l'épaulement interne EPI permet de maintenir fixe l'antenne Ant dans l'insert Ins, et ce, de manière simple à réaliser, et à coût réduit.

Un insert diélectrique Ins peut rester externe aux deux guides d'onde VP, VC, ainsi aucune partie d'insert ne se retrouve à l'intérieur des deux guides d'onde, ce qui simplifie la conception du coupleur et facilite les échanges thermiques.

Ces antennes Ant peuvent varier en diamètre et en hauteur après optimisation permettant d'obtenir de meilleures performances en termes de directivité et de diminuer la longueur totale du coupleur.

Une antenne Ant peut être de de forme cylindrique et munie d'une collerette Col montée en butée sur l'épaulement interne de l'insert Ins.

Le choix du diélectrique se fait en fonction des besoins d'utilisation en prenant en compte la température et la puissance.

La figure 3 est une vue de coupe dans le sens longitudinal du coupleur de la figure 2.

## Revendications

1. Coupleur hyperfréquence bidirectionnel comprenant deux guides d'onde parallèles (VP, VC), à double nervure (NVP, NVC), ayant deux faces respectives disposées en vis-à-vis et reliées mécaniquement par une couche métallique (CM), et comprenant des ensembles antenne (EA) reliant les intérieurs respectifs de parties pleines hors nervures des deux guides d'onde (VP, VC), un ensemble antenne (EA) comprenant une antenne (Ant) montée fixement dans un insert diélectrique (Ins) monté fixement dans ladite couche métallique (CM).

2. Coupleur selon la revendication 1, dans lequel l'insert diélectrique (Ins) comprend un épaulement externe (EPE) et un épaulement interne (EPI).

3. Coupleur selon l'une des revendications précédentes, dans lequel l'insert diélectrique (Ins) monté fixement dans ladite couche métallique (CM) est dépourvu de portion à l'intérieur des deux guides d'onde (VP, VC).

4. Coupleur selon l'une des revendications précédentes, dans lequel l'antenne (Ant) est de forme cylindrique et munie d'une collerette (Col) destinée à être montée en butée sur l'épaulement interne (EPI) d'un insert (Ins).

5. Coupleur selon l'une des revendications précédentes, dans lequel l'insert (Ins) diélectrique comprend un fluoropolymère.

6. Coupleur selon l'une des revendications précédentes, dans lequel l'antenne (Ant) comprend de l'aluminium et/ou du cuivre.

7. Coupleur selon l'une des revendications précédentes, dans lequel la couche métallique (CM) comprend du cuivre et/ou de l'aluminium.

## Patentansprüche

1. Bidirektionaler Mikrowellenkoppler, der zwei parallele Doppelrippen-(NVP, NVC)-Wellenleiter (VP, VC) mit zwei jeweiligen einander gegenüberliegend angeordneten und durch eine Metallschicht (CM) mechanisch verbundenen Seiten umfasst, und der Antennenanordnungen (EA) umfasst, die jeweils das Innere von massiven Teilen außerhalb der Rippen der beiden Wellenleiter (VP, VC) verbinden, wobei eine Antennenanordnung (EA) eine Antenne (Ant) umfasst, die fest in einem dielektrischen Einsatz (Ins) montiert ist, der fest in der Metallschicht (CM) montiert ist.

2. Koppler nach Anspruch 1, wobei der dielektrische Einsatz (Ins) eine äußere Schulter (EPE) und eine innere Schulter (EPI) umfasst.

3. Koppler nach einem der vorhergehenden Ansprüche, wobei der fest in der Metallschicht (CM) montierte dielektrische Einsatz (Ins) innerhalb der beiden Wellenleiter (VP, VC) keinen Abschnitt aufweist.

4. Koppler nach einem der vorhergehenden Ansprüche, wobei die Antenne (Ant) eine zylindrische Form hat und mit einem Kragen (Col) versehen ist, der zum Montieren in Anlage an der inneren Schulter (EPI) eines Einsatzes (Ins) bestimmt ist.

5. Koppler nach einem der vorhergehenden Ansprüche, wobei der dielektrische Einsatz (Ins) ein Fluorpolymer umfasst.

6. Koppler nach einem der vorhergehenden Ansprüche, wobei die Antenne (Ant) Aluminium und/oder Kupfer umfasst.

7. Koppler nach einem der vorhergehenden Ansprüche, wobei die Metallschicht (CM) Kupfer und/oder Aluminium umfasst.

**Claims**

1. A bidirectional microwave coupler comprising two parallel double-rib (NVP, NVC) waveguides (VP, VC), having two respective faces disposed opposite one another and mechanically connected by a metal layer (CM), and comprising antenna assemblies (EA) connecting the respective interiors of solid parts outside the ribs of the two waveguides (VP, VC), an antenna assembly (EA) comprising an antenna (Ant) mounted fixedly in a dielectric insert (Ins) that is mounted fixedly in said metal layer (CM).

2. The coupler according to claim 1, wherein the dielectric insert (Ins) comprises an outer shoulder (EPE) and an inner shoulder (EPI).

3. The coupler according to one of the preceding claims, wherein the dielectric insert (Ins) that is mounted fixedly in said metal layer (CM) does not have a portion inside the two waveguides (VP, VC).

4. The coupler according to one of the preceding claims, wherein the antenna (Ant) is cylindrical in shape and provided with a collar (Col) that is intended to be mounted abutting against the inner shoulder (EPI) of an insert (Ins).

5. The coupler according to one of the preceding claims, wherein the dielectric insert (Ins) comprises a fluoropolymer.

6. The coupler according to one of the preceding claims, wherein the antenna (Ant) comprises aluminium and/or copper.

7. The coupler according to one of the preceding claims, wherein the metal layer (CM) comprises copper and/or aluminium.

FIG.1

FIG.2

FIG.3

FIG.4

FIG.5

## RÉFÉRENCES CITÉES DANS LA DESCRIPTION

**Documents brevets cités dans la description**

- US 2951997 A

**Littérature non-brevet citée dans la description**

- **DAVID M. POZAR.** Microwave Engineering. Wiley, 2012, 339